# EUROPEAN PATENT SPECIFICATION

(11) **EP 1 733 671 B1**
(45) Date of publication and mention of the grant of the patent: **01.10.2014**
(21) Application number: 06112963.1
(22) Date of filing: 24.04.2006
(51) Int. Cl.: A47L 9/16

(54) **Vacuum cleaner**
Staubsauger
Aspirateur

(30) Priority: 10.06.2005 KR 20050049800
(43) Date of publication of application: 20.12.2006
(73) Proprietor: LG Electronics, Inc., Seoul 150-721 (KR)
(72) Inventor: Yoo, Myung Sig, Gyeongsangnam-do (KR)
(74) Representative: Henkel, Breuer & Partner

(56) References cited:
- EP-A2- 1 426 093
- WO-A1-02/34365
- WO-A1-98/10691
- US-A- 1 420 665
- US-A1- 2002 178 698

## Description

### BACKGROUND OF THE INVENTION

### Field of the Invention

The present invention relates to a vacuum cleaner according to the preamble portion of claim 1.

### Discussion of the Related Art

Generally, a vacuum cleaner according to a related art consists of an intake nozzle sucking particles such as dust and the like from a floor, a cleaner body having a dust-collecting container to collect dust by separating the particles, and a connecting tube guiding the particles sucked through the intake nozzle to the cleaner body.

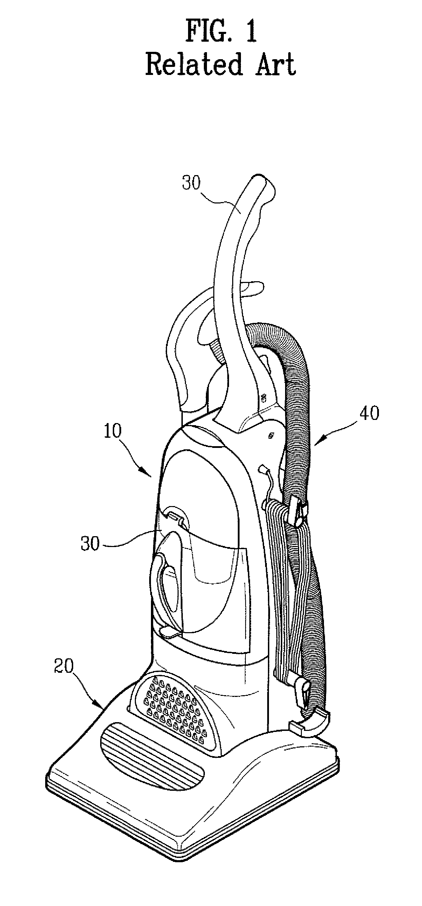

An upright type vacuum cleaner according to a related art is explained with reference to FIG. 1 as follows.

Referring to FIG. 1, an upright type vacuum cleaner is generally used for a large-scale area such as a living room and the like, and more particularly, a place covered with a carpet.

The vacuum cleaner consists of a cleaner body 10 standing upright, an intake nozzle 20 assembled to a lower part of the cleaner body 10, and a connecting tube 40 connecting the cleaner body 10 and the intake nozzle 20 together.

The intake nozzle moves around a floor to suck air containing various particles such as dust and the like. The cleaner body 10 plays a role in separating the particles from the sucked air. An air intake device (not shown in the drawing) is provided to the cleaner body 10 to generate an air intake force. And, a cleaner handle is provided to one side of the cleaner body 10 to carry the cleaner body 10.

Meanwhile, a dust collecting device 30 is detachably assembled to the cleaner body 10 to separate particles from the sucked air.

The dust collecting device consists of a cyclone chamber having a cone shape overall and an intake port, via which air and particles (dust, fluff, paper piece, etc.) can be sucked in a tangential direction within the cyclone chamber, provided to an upper outer circumference of the cyclone chamber.

An outlet is provided to the cyclone chamber to discharge the sucked air to an outside of the cyclone chamber. And, the outlet is configured to penetrate an upper part of the cyclone chamber.

A dust collecting filter is provided within the cyclone chamber to remove the particles from the introduced air. The dust collecting filter is a filter made of a porous member such as a sponge and the like and is detachably assembled to the cyclone chamber of the dust collecting device.

The dust collecting filter such as a sponge provided to the dust collecting device plays a role in primarily filtering off particles contained in the air directly introduced from a contaminated surface of floor.

Yet, since the air directly introduced from outside contains a relatively large volume of particles, the related art dust collecting filter constructed with small-size perforated holes such as a sponge and the like is rapidly blocked. So, a flow resistance abruptly increases as a cleaning process proceeds.

In case of using a dust collecting filter constructed with relatively large-size perforated holes, the flow resistance can be reduced. Yet, it is difficult to filter off microscopic dust. So, dust collecting performance of the dust collecting device is degraded. And, the air intake device can be damaged since the microscopic dust is included in the air to be discharged.

Moreover, the microscopic dust having filtered off by the cyclone chamber can be re-discharged from the dust collecting device by the intake force of the air intake device after having been collected by the dust collecting container.

Besides, as the particles having been filtered off by the dust collecting filter are attached to an exterior of the dust collecting filter, a user's hand or clothes may be stained with the particles in cleaning or exchanging the dust collecting filter. Thus, the dust collecting filter is not facilitated to be handled.

WO 98/10691 A1 discloses a vacuum cleaner with the features of the preamble portion of claim 1.

WO 02/34365 A1 discloses a device for separating particles from air which includes a cylindrical blade filter.

### SUMMARY OF THE INVENTION

Accordingly, the present invention is directed to a vacuum cleaner that substantially obviates one or more problems due to limitations and disadvantages of the related art.

An object of the present invention is to provide a vacuum cleaner, by which dust collecting performance can be enhanced while a flow resistance of air is reduced.

Another object of the present invention is to provide a vacuum cleaner, by which particles collected in a dust collecting container is prevented from being discharged outside the dust collecting container.

Another object of the present invention is to provide a vacuum cleaner, by which a dust collecting filter is facilitated to be handled and used by a user conveniently.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, the present invention provides a vacuum cleaner as defined in claim 1.

As embodied and broadly described herein, a vacuum cleaner according to the present invention includes a cleaner body having a body inlet and a body outlet wherein an air sucked by an intake nozzle is introduced via the body inlet to be discharged outside via the body outlet, a primary cyclone having a first inlet communicating with the body inlet and a first outlet to separate particles from the introduced air, at least one secondary cyclone provided outside the primary cyclone to re-separate particles contained in the air discharged from the primary cyclone, a first connecting tube connecting the first inlet and the body inlet together, a dust storing part storing dust separated by the primary cyclone and the at least one secondary cyclone, and a blade filter having a plurality of main blades arranged at a prescribed angle each and a support member supporting a plurality of the main blades, the blade filter provided within the primary cyclone to filter the air within the primary cyclone.

Preferably, the vacuum cleaner further includes a scatter-preventing member provided to the blade filter to prevent the particles separated by the primary cyclone from being scattered.

More preferably, the scatter-preventing member is built in one body of a lower end of the blade filter.

Preferably, a plurality of the main blades are evenly spaced from each other in a circumferential direction.

Preferably, the blade filter is detachably provided within the primary cyclone.

More preferably, a projection having a prescribed shape is provided to either an upper end of the blade filter or a rim of the first outlet, a locking recess is provided to either the rim of the first outlet or the upper end of the blade filter to have the projection locked therein, and the projection and the locking recess are locked together by rotating the blade filter relatively along the rim of the first exhaust.

Preferably, the vacuum cleaner further includes an auxiliary filter provided to either an inside or outside of the blade filter to filter off the particles contained in the air.

According to the invention, the blade filter has a downwardly tapered shape.

Preferably, each of a plurality of the main blades is inwardly and downwardly tilted.

More preferably, an upper width of each of a plurality of the main blades is greater than a lower width of the corresponding main blade.

Preferably, the dust storing part is provided under the primary cyclone to be detachably assembled to the cleaner body.

Preferably, the at least one secondary cyclone is arranged on an outer circumference of the primary cyclone in a circumferential direction to be built in one body of the primary cyclone.

Preferably, the vacuum cleaner further includes an upper cover detachably assembled to tops of the primary cyclone and the at least one secondary cyclone to cover the tops wherein a filter filtering off dust from the air discharged from the at least one secondary cyclone is provided within the upper cover.

Preferably, the blade filter is formed of a plastic based material to facilitate the blade filter to be cleaned.

In a further aspect of the present invention, a vacuum cleaner includes an intake nozzle moving along a floor surface to suck an air containing dust, a cleaner body provided over the intake nozzle.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a perspective diagram of a vacuum cleaner according to a related art;
FIG. 2 is a perspective diagram of a vacuum cleaner according to one example serving to explain features of the present invention;
FIG. 3 is a cross-sectional diagram of a vacuum cleaner in FIG. 2 according to one example serving to explain features of the present invention;
FIG. 4 is an exploded perspective diagram of a dust collecting device in FIG. 2;
FIG. 5 is a perspective diagram of an upper part of a dust collecting device in FIG. 2;
FIG. 6 is a perspective diagram of a vacuum cleaner according to an embodiment of the present invention;
FIG. 7 is an exploded perspective diagram of a dust collecting device in FIG. 6; and
FIG. 8 is a cross-sectional diagram of a dust collecting device in FIG. 6.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

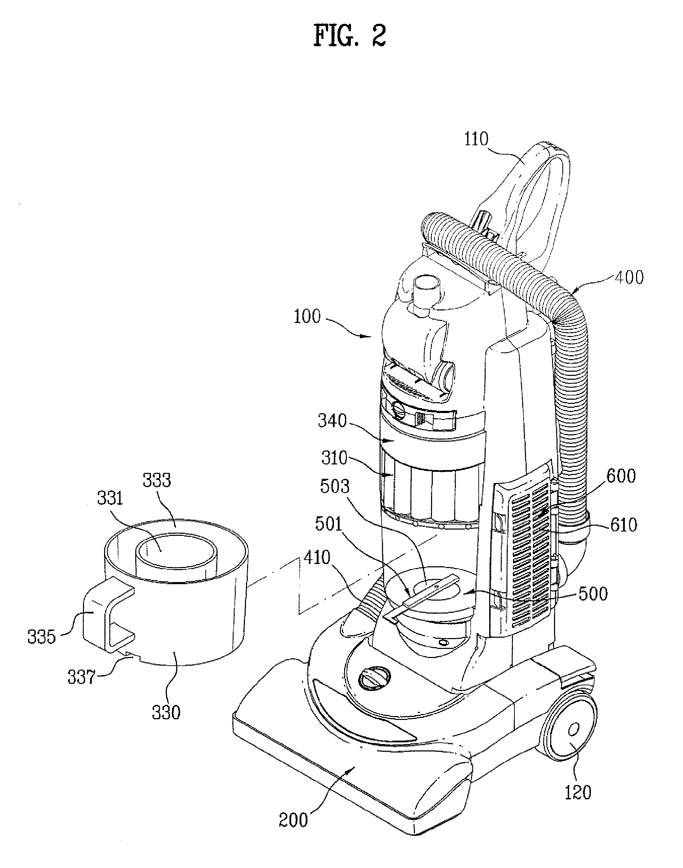

FIG. 2 is an exploded perspective diagram of a vacuum cleaner according to one example serving to explain features of the present invention.

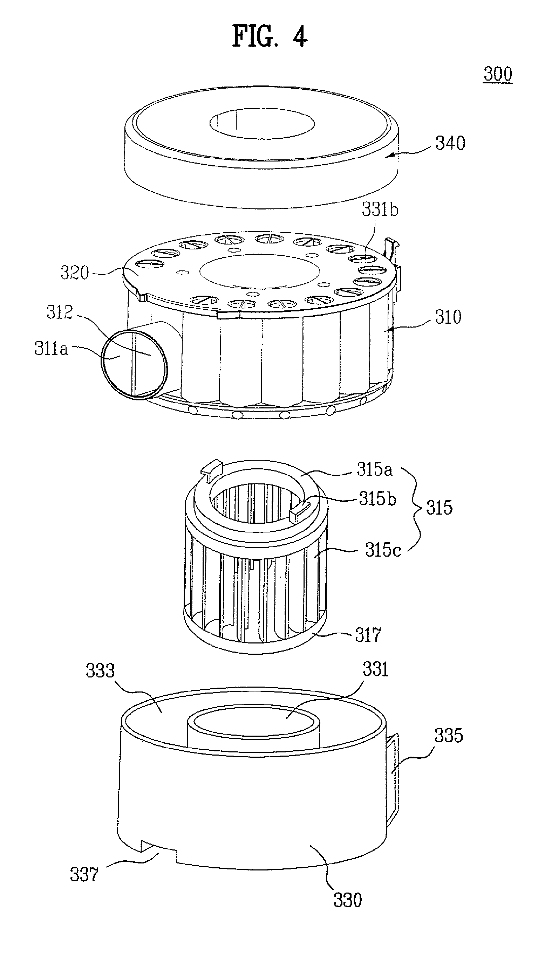

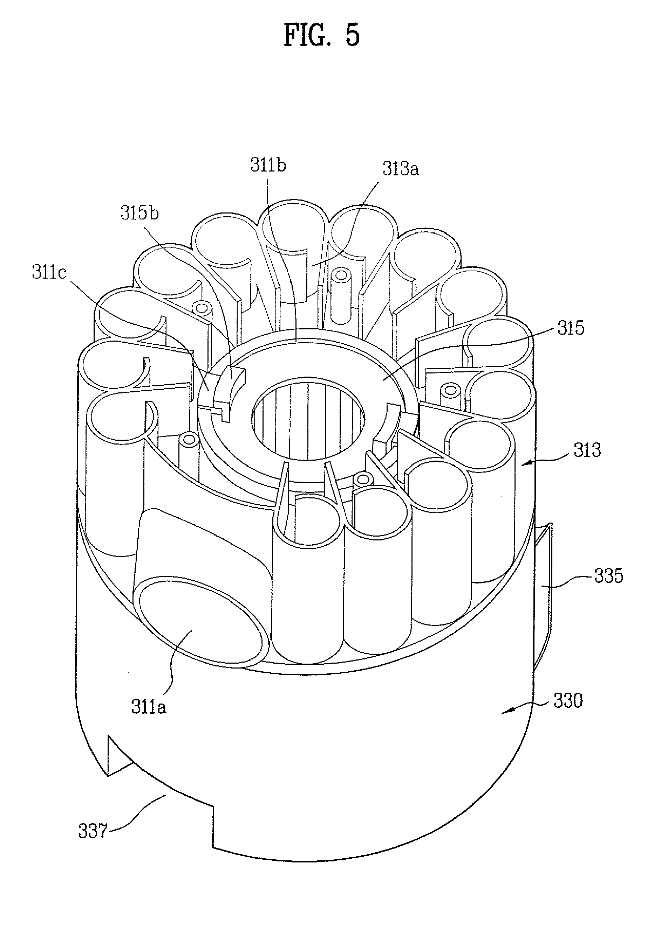

Referring to FIGs. 2 to 5, a vacuum cleaner according to one example serving to explain features of the present invention includes an intake nozzle 200 sucking air containing particles such as dust and the like by moving along a surface of a floor to be cleaned, a cleaner body 100 communicating with the intake nozzle 200, and a connecting tube 400 connecting the intake nozzle 200 and the cleaner body 100 together to guide the air sucked by the intake nozzle 200 to the cleaner body 100.

A plurality of wheels 120 are rotatably provided to one side of the intake nozzle 200 to enable the intake nozzle 200 to move on the floor surface smoothly. A nozzle intake port 210 having a prescribed size is formed on a bottom of the intake nozzle 200. And, an agitator 220 is provided to the nozzle intake port 210 to sweep up particles.

Rotational shafts (not shown in the drawings) are projected from both ends of the agitator 220, respectively, and recesses (not shown in the drawings) are provided to both sidewalls of the nozzle intake port 210 to have the rotational shafts fitted therein, respectively. In particular, a plurality of blades (not shown in the drawings) are preferably provided to an outer circumference of the agitator 220 in a spiral direction.

A plurality of the blades (not shown in the drawings) are provided to be evenly spaced apart from each other. And, a plurality of the blades play a role in detaching particles stacked on or attached to the floor to sweep up to the nozzle intake port 210 while the agitator 220 is rotating. Optionally, a brush (not shown in the drawings) can be further provided between a plurality of the blades (not shown in the drawing) in the spiral direction.

In order to rotate the agitator 220, an agitator motor (not shown in the drawings) and a belt (not shown in the drawings) transferring a power of the agitator motor (not shown in the drawings) to the agitator 220 are provided to one side of the intake nozzle 200.

So, once a rotational force of the agitator motor is transferred to the agitator 220 via the belt, the agitator 220 is rotated to sweep up particles on the floor to the nozzle intake port 210. Alternatively, the agitator 220 can be driven by an air intake device 150 and a power transmission device provided to one of the cleaner body 100 and the intake nozzle 200.

The cleaner body 100 includes a body inlet (not shown in the drawings) provided to an upper part of the intake nozzle 200 so that air is introduced into an inside of the cleaner body 100 via the body inlet and a body outlet 610 provided to one lateral side of the cleaner body 100 so that air can be discharged outside.

An electronic/electric part (not shown in the drawings) controlling the vacuum cleaner and an air intake device 150 sucking air into the inside of the cleaner body 100 to force the sucked air to flow.

In particular, the air intake device 150 includes an air inlet (not shown in the drawings) provided under the dust collecting device to communicate with the dust collecting device and an air outlet 151 communicating with an external atmosphere. Alternatively, the air intake device 150 can be provided to the intake nozzle 200.

The connecting tube 400 is provided to the cleaner body 100 to guide the air sucked by the intake nozzle 200 to the cleaner body 100 and to guide the air passing through the cleaner body 100 to the external atmosphere.

The connecting tube 400 includes a first connecting tube 410 connecting the nozzle intake port 210 and the dust collecting device 300 together, a second connecting tube 420 connecting the dust collecting device 300 and the air intake (not shown in the drawings) provided to the air intake device, and a third connecting tube (not shown in the drawings) connecting the air outlet 151 provided to the air intake device and the external atmosphere together.

And, an exhaust chamber 600, via which the air passing through the air intake device 150 is discharged, is provided to a lateral side of the cleaner body 100. An exhaust filter 620 is installed at the exhaust chamber 600 to re-filter off particles contained in the air that is not discharged outside yet.

Preferably, a HEPA (high efficiency particulate air) filter is used as the exhaust filter to filter of microscopic dust having microscopic particles.

The exhaust filter 620 is installed at a filter support member 612. And, the filter support member 612 is detachably assembled within the exhaust chamber 600 to facilitate an exchange of the exhaust filter 620.

A connecting cord support member 112 is provided to a rear side of the cleaner body 100. The connecting cord support member 112 plays a role in winding to store a connecting cord for supplying a power to the cleaner body 10. Alternatively, the connecting cord support member 112 can be provided to a lateral side of the cleaner body 100.

A cleaner handle 110 is provided to an upper end of the cleaner body 100 to handle the cleaner body 100. The dust collecting device 300 is detachably assembled to a front part of the cleaner body 100. And, the dust collecting device 300 plays a role in collecting dust in a manner of separating particles from the air sucked via the intake nozzle 200 from outside.

The dust collecting device 300 includes a cyclone chamber 310 separating particles by the cyclone principle and a dust collecting container 330 storing the particles or dust separated by the cyclone chamber 310.

In the present example, the dust collecting container 330 is detachably assembled to the cyclone chamber 310 and has an approximately cylindrical shape.

The cyclone chamber 310 includes a primary cyclone 311 separating particles from the air introduced inside and a secondary cyclone 313 provided outside the primary cyclone 311 to re-separate particles from the air having passed through the primary cyclone 311.

The primary cyclone 311 includes a first inlet 311a communicating with the body inlet and a first outlet 311b communicating with the secondary cyclone 313.

In particular, the primary cyclone 311 has a cylindrical shape of which lower end is open and the same central axis of the dust collecting device 300. The first inlet 311a is provided to an upper lateral side of the primary cyclone 311 and the first outlet 311b is provided to a ceiling center of the primary cyclone 311.

The first inlet 311a guides a polluted air introduced from outside in a tangential direction of the primary cyclone 311. In particular, a guide rib 312 is provided to one side of the first inlet 311a to guide the air introduced into the first inlet 311a to make a spiral flow along an inner wall of the primary cyclone 311.

Meanwhile, at least one or more secondary cyclones 313 are provided to an outer circumference of the primary cyclone 311 to re-separate particles from the air discharged from the primary cyclone 311.

The at least one or more secondary cyclones 313 are arranged on an upper circumference of the primary cyclone 311 to form an exterior of an outer wall of the dust collecting device 300.

In other words, the at least one or more secondary cyclones 313 are built in one body of the upper circumference of the primary cyclone 311.

Each of the secondary cyclones 313 has a conic portion of which diameter decreases downward and a particle discharge hole is formed at a lower end of the conic part to discharge such particles as dust and the like to the dust collecting container.

A portion of a lateral side of each of the secondary cyclones 313 projected upward is vertically cut to form a second inlet 313a communicating with the first outlet 311b.

The second inlet 313a leads the air discharged from the first outlet 311b in a tangential direction of an inner wall of the corresponding secondary cyclone 313 so that the introduced air can flow spirally along the inner wall of the corresponding secondary cyclone 313.

In this case, the adjacent secondary cyclones 313 are built in one body to contact with each other so that air can be prevented from leaking through a gap between the corresponding secondary cyclones 313.

The cyclone chamber 310 is installed within the primary cyclone 311 and includes a blade filter 315 that filters an air within the primary cyclone 311.

In the present example, the blade filter 315 is vertically installed within the primary cyclone 311 along an axial line of the primary cyclone 311.

The guide rib 312 guides the air introduced into the first inlet 311a to the inner wall of the primary cyclone 311 to prevent the air introduced into the first inlet 311a from being directly introduced into the blade filter 315.

In this case, the blade filter 315 is provided to a center of the primary cyclone 311 in an axial direction and has a shape of which upper and lower ends are open and closed, respectively.

The blade filter 315 includes a plurality of main blades 315c arranged at a prescribed angle and a support member 315a supporting a plurality of the main blades 315c.

Each of the main blades 315c has a wing shape. Preferably, a virtual extension line of each of the main blades 315c forms an appropriate acute angle with an air flow direction within the primary cyclone 311.

If an angle between the air flow direction and the virtual extension line of the blade is too small, a flow resistance increases. If the angle between the air flow direction and the virtual extension line of the blade is too large, particles contained in the air can easily escape from the blade filter 315.

And, the main blades 315c are arranged in a circumferential direction to be evenly spaced apart from each other.

Moreover, it is preferable that the blade filter 315 is detachably provided within the primary cyclone 311.

For this, a projection 315b having a prescribed shape is formed on an upper end of the blade filter 315 and a locking recess 315b is provided to a rim of the first outlet 311b to correspond to the projection 315b.

So, the blade filter 315 is relatively rotated along the rim of the first outlet 311b so that the projection 311c and the locking recess 315b can be locked together. Alternatively, the projection can be formed on the rim of the first outlet 311b and the locking recess 311c can be formed on the upper end of the blade filter 315.

Moreover, the blade filter 315, and more particularly, the main blades 315c are preferably formed of a plastic based material to facilitate a cleaning of the blade filter 315.

Optionally, an auxiliary filter can be provided to at least one of the inside and outside of the blade filter 315 to re-filter off particles contained in air. The auxiliary filter can have the same structure and shape of the blade filter 315. And, the auxiliary filter may include a filter of a porous member.

Meanwhile, a scatter-preventing member 317 is preferably provided to the blade filter 315 to prevent dust stored within the dust collecting container 330 from being scattered. The scatter-preventing member 317 plays a role in preventing the dust collected by the dust collecting container 330 from being scattered, whereby the dust collected by the dust collecting container 330 can be prevented from being introduced into the secondary cyclones 313.

For this, the scatter-preventing member 317 is built in one body of a lower end of the blade filter 315. Preferably, the scatter-preventing member 317 has a radial shape so that an upper surface of the scatter-preventing member 317 is tilted downward toward its outer circumference. This facilitates the particles filtered off by the blade filter 315 to fall down to the dust collecting container.

Preferably, a scatter-preventing wing (not shown in the drawings) is additionally provided under the scatter-preventing member 317 to assist the scatter-preventing member 317.

The scatter-preventing wing is extended under the scatter-preventing member 317 to play a role in preventing the dust collected by the dust collecting container from being scattered.

An upper cover 340 is detachably assembled to upper parts of the primary and secondary cyclones to cover an upper part of the cyclone chamber 310.

A main filter assembly 341 is provided within the upper cover 340 to filter off particles from the air discharged from the secondary cyclones 313.

The main filter assembly 341 includes a main filter 341a of a porous member and a filter support member (not shown in the drawings) supporting the main filter 341a. And, the main filter assembly 341 is detachably assembled to tops of the secondary cyclones 313.

In particular, the main filter 341a is installed in a filter housing 341b communicating with the cyclone chamber 310. So, the air having passed through the main filter 341a is introduced into the cleaner body 100 via a third outlet 343 provided to the upper cover 340.

And, the cyclone chamber 310 further includes a cyclone cover 320 provided to an upper end of the cyclone chamber 310 to enable opening and closing.

A passage guide 321 is provided within the cyclone cover 320 to guide the air discharged from the first outlet 311b to the secondary cyclones 313 more smoothly.

And, a plurality of outlets 331b are formed on an edge part of the cyclone cover 320 to discharge the air having passed through the secondary cyclones 313.

Meanwhile, the dust collecting container 330 is provided under the cyclone chamber 310 to store the dust separated by the cyclone chamber 310 therein.

The dust collecting chamber 330 includes a primary dust storing part 331 storing dust separated by the primary cyclone 311 and a secondary dust storing part 333 storing dist separated by the secondary cyclones 313.

A boundary wall (not shown in the drawings) is provided between the primary and secondary dust storing parts 331 and 333 to partition the primary and secondary dust storing parts 331 and 333 from each other. Namely, the boundary wall prevents the primary and secondary dust storing parts 331 and 333 from communicating with each other.

Preferably, the boundary wall is configured to have a curved shape in a circumferential direction. This is to prevent the dust stored in the primary dust storing part 331 from being scattered in a manner of eliminating a spiral flow formed by the primary cyclone 311.

A dust collecting container handle 335 is provided to a lateral side of the dust collecting container 330 to attach/detach the dist collecting container 330. Fixing devices 501 and 503 are provided beneath the dust collecting container to assemble/dissemble the dust collecting container 330 and the cyclone chamber 310.

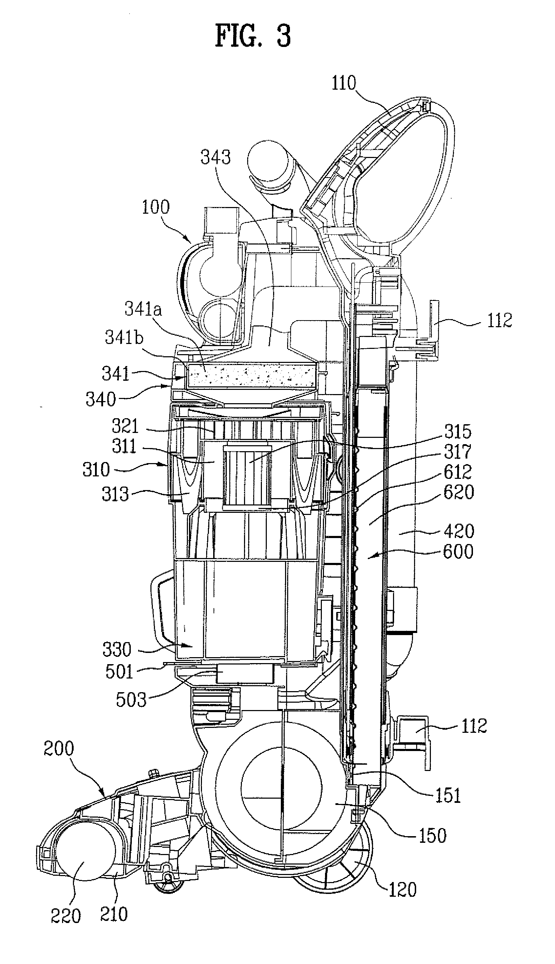

Operations of the above-configured vacuum cleaner according to one example serving to explain features of the present invention are explained with reference to FIGs. 3 to 6 as follows.

Referring to FIGs. 3 to 6, once the vacuum cleaner is driven, the air containing particles is introduced into the primary cyclone 311 via the intake nozzle 200 and the first connecting tube 410.

The air introduced via the first inlet 311a of the primary cyclone 311 is guided in a direction tangential to the inner wall of the primary cyclone 311.

In particular, the air introduced into the primary cyclone 311 makes a spiral flow along the inner wall of the primary cyclone 311 by the guide rib 312 provided to the first inlet 311a instead of being directly introduced into the blade filter 315.

So, relatively large and heavy dust separated by the cyclone principle falls to be stored in the primary dust storing part 331. In this case, the dust stored in the primary dust storing part 331 is prevented by the scatter-preventing member 317 from being scattered.

The air, from which the relatively large dust is separated, passes through gaps between the blades 315c of the blade filter 315 and is then discharged via the first outlet 311b provided to the ceiling of the primary cyclone 311.

In doing so, each of the blades 315c has a spiral flow of the air and a prescribed tilted angle, whereby particles contained in the discharged air can be re-filtered off.

Subsequently, the air having passed through the first outlet 311b is introduced into a plurality of the secondary cyclones 313 to go through the dust separating process. The air, from which relatively small dust was separated by the secondary cyclones, is introduced into the upper cover 340 via the second outlet 331b.

The air introduced into the upper cover 340 is filtered by the main filter assembly 341 and is then discharged via the third outlet 343 provided to the upper end of the upper cover 340.

The air discharged from the third outlet 343 is sucked into the air intake device 150 provided to the cleaner body 100 via the second connecting tube.

The air having passed through the air intake device 150 moves along the third connecting tube and is then discharged outside via the exhaust chamber 600 provided to the lateral side of the cleaner body 100.

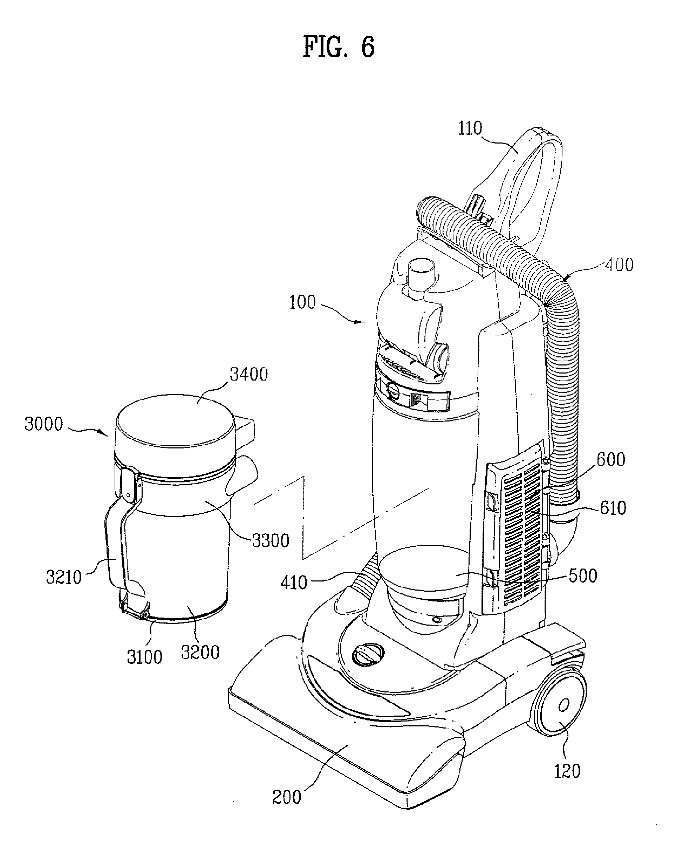

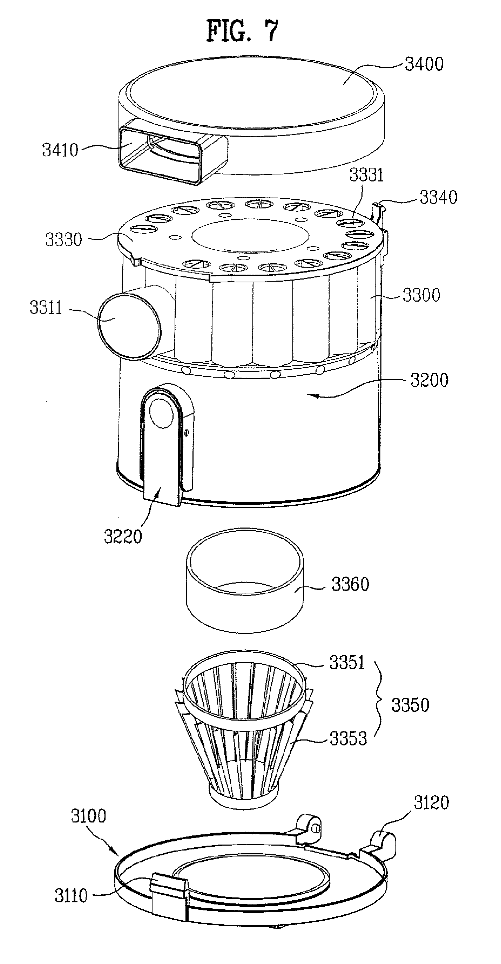

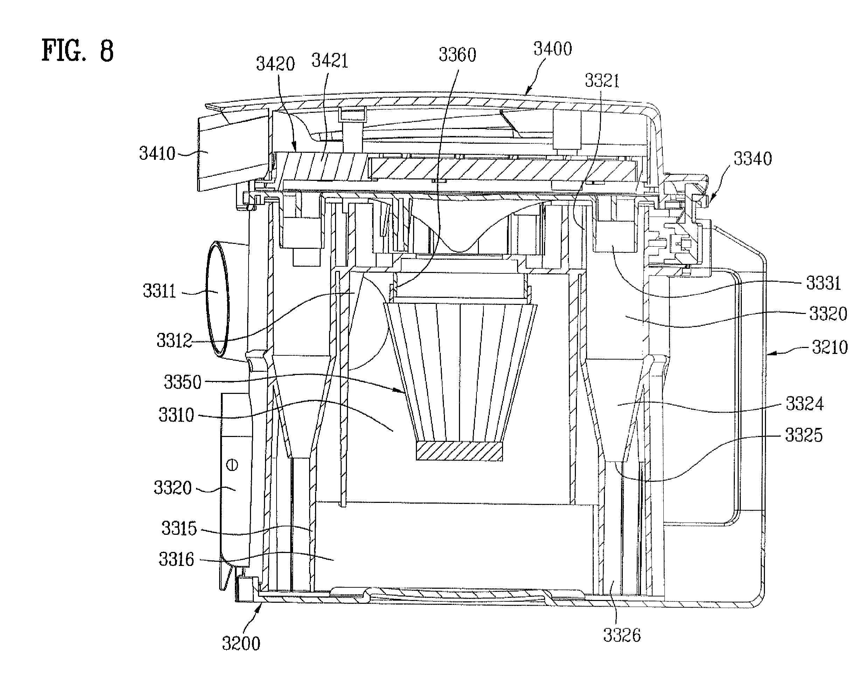

FIG. 6 is a perspective diagram of a vacuum cleaner according to an embodiment of the present invention, FIG. 7 is an exploded perspective diagram of a dust collecting device in FIG. 6, and FIG. 8 is a cross-sectional diagram of a dust collecting device in FIG. 6.

Referring to FIGs. 6 to 8, a dust collecting device 3000 includes a dust collecting container 3200 having a lower part enabling opening and closing and an upper cover 3400 detachably assembled to the dust collecting container 3200.

Primary and secondary cyclones 3310 and 3320 are provided within the dust collecting container 3200 to separate and collect particles such as dust and the like. A lower panel 3100 enabling opening and closing is provided to a bottom of the dust collecting container 3200. And, a switching device 3220 is provided to a lateral side of the dust collecting container 3200 to switch the opening/closing of the lower panel 3100.

Like the former embodiment of the present invention, a first inlet 3311 and a first outlet are formed at the primary cyclone 3310. And, a guide rib 3312 is provided to one side of the first inlet 3311 to guide an air flow in a tangential direction of the primary cyclone 3310.

The secondary cyclones 3320 are arranged on an upper circumference of the primary cyclone 3310 in a circumferential direction and are built in one body of an outer wall of the dust collecting container 3200.

A conic part 3324 having a diameter decreasing downward is provided to a lower part of each of the secondary cyclones 3320. And, a particle discharging hole 3325 is formed at a lower end of the conic part 3324 to discharge particles.

Each of the secondary cyclones 3320 includes a second inlet 3321 communicating with the primary cyclone 3310 and a second outlet 3331 communicating with the upper cover 3400. And, a dust storing part is provided under the primary and secondary cyclones 3310 and 3320.

In other words, the dust storing part is provided under the dust collecting container.

In particular, the dust separated by the primary cyclone 3310 and the dust separated by the secondary cyclones 3320 are stored in the primary and secondary dust storing parts 3316 and 3326 configured by the outer wall of the dust collecting container 3200 and the lower panel 3100, respectively.

If the lower panel 3100 is opened by the switching device 3220, the dust is discharged outside by gravity.

In this case, the primary and secondary dust collecting parts 3316 and 3326 are partitioned from each other by a boundary wall 3315 downwardly extending from the secondary cyclone 3320.

A lower end of the boundary wall 3315 is formed longer than a lower end of the primary cyclone 3310 downwardly to extend to the bottom of the dust collecting container 3200, i.e., an upper surface of the lower panel 3100. Hence, the boundary wall 3315 prevents the primary and secondary dust storing parts 3316 and 3326 from communicating with each other.

Preferably, the boundary wall 3315 is configured to have a curved shape in a circumferential direction. This is to prevent the dust stored in the primary dust storing part 3316 from being scattered in a manner of eliminating a spiral flow formed by the primary cyclone 3310.

Meanwhile, a blade filter 3350 is provided within the primary cyclone 3310 to filter air within the primary cyclone 3310. The blade filter 3350 includes a plurality of main blades 3353 tilted at a prescribed angle each and a support member 3351 supporting a plurality of the main blades 3353.

A connecting member 3360 is provided to an upper part of the blade filter 3350 to assemble the blade filter 3350 within the primary cyclone 3310.

One side of the connecting member 3360 is fitted in the support member 3351, while the other side is connected to a ceiling of the primary cyclone 3310.

Optionally, a locking projection is provided to an end of the connecting member 3360 and a locking recess is provided to the ceiling of the primary cyclone 3310 to correspond to the locking projection.

An upper part of the blade filter 3350 assembled to the connecting member 3360 is formed wide, while a lower part thereof is formed narrow. Likewise, an upper part of each of the main blades 3353 is formed wide, while a lower part thereof is formed narrow.

Thus, since each of the blade filter 3350 and the main blade 3353 has the wide upper part and the narrow lower part, a flow resistance is minimized in discharging the air within the primary cyclone 3310 to the secondary cyclones 3320. And, microscopic dust can be filtered off more effectively by the shape and angle of each of the main blades 3353.

In this case, curved angles of the upper and lower parts of each of the main blades 3353 can be formed different from each other according to a design condition.

Meanwhile, a hinge locking part 3120 and a hook 3110 are provided to the lower panel 3100 to be assembled to the dust collecting container 3200. The hinge locking part 3120 is hinged to a lower lateral side of the dust collecting container 3200, while the hook 3110 is assembled to the switching device 3220 provided to the lateral side of the dust collecting container 3200.

If a user presses a button of the switching device 3220, the lock between the hook 3110 and the switching device 3220 is released to open the lower panel 3100. So, the dust stored in the dust collecting container 3200 is discharged outside by gravity.

An upper cover 3400 is detachably assembled to an upper part of the dust collecting container 3200. A filter housing 3420 is provided to the upper cover 3400 to communicate with the dust collecting container 3200. And, a dust collecting filter 3421 is provided to the filter housing 3420 to re-filter the air having passed through the dust collecting container 3200.

The air having passed through the dust collecting filter 3421 is introduced into the cleaner body via a third outlet 3410 provided to the upper cover 3400.

The upper cover 3400 and the dust collecting container 3200 are assembled or dissembled by an upper cover attaching/detaching device 3340. And, the upper cover attaching/detaching device 3340 includes a hook provided to the dust collecting container and a locking recess provided to the upper cover.

Alternatively, the hook can be provided to the upper cover and the locking recess can be provided to the dust collecting container. Optionally, the upper cover attaching/detaching device 3340 can include a locking projection and a locking recess.

A dust collecting device handle 3210 is provided to a lateral side of the dust collecting container. The dist collecting device handle 3210 is built in one body of the dust collecting container 3200. And, an assembling device can be provided under the dust collecting device handle 3210 to assemble the dust collecting device to the cleaner body.

Besides, the above-configured dust collecting device according to the present invention is applicable to a canister type vacuum cleaner as well as an upright type vacuum cleaner.

Accordingly, the present invention provides the following effects or advantages.

First of all, particles are primarily collected by the primary cyclone and the rest particles are additionally removed by the secondary cyclone(s). And, the blade filter provided within the primary cyclone, into which the air containing a large quantity of the particles is introduced, whereby the flow resistance can be reduced and whereby microscopic dust can be collected as well.

Secondly, the auxiliary blade filter is provided within or outside the blade filter provided within the primary cyclone, whereby the particles contained in the air introduced into the primary cyclone can be collected more efficiently.

Thirdly, the upper part of the blade filter is formed wide and the lower part thereof is narrow. So, the blade filter has a conic shape. And, the main blade has a tapered width. Hence, the air within the primary cyclone can be easily discharged as well as microscopic dust can be collected.

Fourthly, by differentiating the curved angles of the upper and lower parts of the main blade from each other, the flow resistance can be reduced and the dust collecting performance can be enhanced.

Fifthly, by providing the downward-tilted scatter-preventing member under the blade filter, the microscopic dust filtered off by the blade can be easily collected and the collected particles can be also prevented from being scattered.

Moreover, by providing the scatter-preventing wing under the scatter-preventing member, the particles stacked in the dust collecting container can be more effectively prevented from being discharged via the outlet of the primary cyclone.

Finally, by adjusting the arrangement of the main blades, the passage resistance of the air can be reduced and the microscopic dust can be more efficiently collected.

## Claims

1. A vacuum cleaner comprising:
a cleaner body (100) having a body inlet and a body outlet (610) wherein an air sucked by an intake nozzle (200) is introduced via the body inlet to be discharged outside via the body outlet (610);
a primary cyclone (3310) having a first inlet (3311) communicating with the body inlet and a first outlet to separate particles from the introduced air;
at least one secondary cyclone (3320) provided outside the primary cyclone (3310) to re-separate particles contained in the air discharged from the primary cyclone (3310);
a first connecting tube (410) connecting the first inlet (3111) and the body inlet together; and
a dust storing part for storing dust separated by the primary cyclone (3310) and the at least one secondary cyclone (3320);
**characterized by** comprising
a blade filter (3350) having a plurality of main blades (3353) arranged at a prescribed angle each and a support member (3351) supporting a plurality of the main blades (3353),
wherein the blade filter (3350) is provided within the primary cyclone (3310) to filter the air within the primary cyclone (3310), and
wherein the blade filter (3350) has a downwardly tapered shape.

2. The vacuum cleaner of claim 1, further comprising a scatter-preventing member provided to the blade filter to prevent the particles separated by the primary cyclone from being scattered.

3. The vacuum cleaner of claim 2, wherein the scatter-preventing member is built in one body of a lower end of the blade filter.

4. The vacuum cleaner of any one of claims 1 to 3, wherein a plurality of the main blades (3353) are evenly spaced from each other in a circumferential direction.

5. The vacuum cleaner of any one of claims 1 to 4, wherein the blade filter (3350) is detachably provided within the primary cyclone (3310).

6. The vacuum cleaner of claim 5, wherein a projection having a prescribed shape is provided to either an upper end of the blade filter or a rim of the first outlet, wherein a locking recess is provided to either the rim of the first outlet or the upper end of the blade filter to have the projection locked therein, and wherein the projection and the locking recess are adapted to be locked together by rotating the blade filter relatively along the rim of the first outlet.

7. The vacuum cleaner of any one of claims 1 to 6, further comprising an auxiliary filter provided to either an inside or outside of the blade filter to filter off the particles contained in the air.

8. The vacuum cleaner of any one of claims 1 to 7, wherein each of a plurality of the main blades (3353) is inwardly and downwardly tilted.

9. The vacuum cleaner of claim 8, wherein an upper width of each of a plurality of the main blades (3353) is greater than a lower width of the corresponding main blade (3353).

10. The vacuum cleaner of any one of claims 1 to 9, wherein the dust storing part is provided under the primary cyclone (3310) to be detachably assembled to the cleaner body (100).

11. The vacuum cleaner of any one of claims 1 to 10, wherein the at least one secondary cyclone (3320) is arranged on an outer circumference of the primary cyclone (3310) in a circumferential direction to be built in one body of the primary cyclone (3310).

12. The vacuum cleaner of any one of claims 1 to 11, further comprising an upper cover (3400) detachably assembled to tops of the primary cyclone (3310) and the at least one secondary cyclone (3320) to cover the tops wherein a filter for filtering off dust from the air discharged from the at least one secondary cyclone (3320) is provided within the upper cover (3400).

13. The vacuum cleaner of any one of claims 1 to 12, wherein the blade filter (3350) is formed of a plastic based material to facilitate the blade filter (3350) to be cleaned.

## Patentansprüche

1. Ein Staubsauger mit:
einem Reinigerkörper (100) mit einem Körpereinlass und einem Körperauslass (610), wobei durch eine Ansaugdüse (200) angesaugte Luft über den Körpereinlass eingebracht wird, um über den Körperauslass (610) ausgetragen zu werden,
einem Primärzyklon (3310) mit einem ersten Einlass (3311), der mit dem Körpereinlass und einem ersten Auslass kommuniziert, um Teilchen von der eingebrachten Luft abzutrennen,
mindestens einem Sekundärzyklon (3320), der außerhalb des Primärzyklons (3310) vorgesehen ist, um in der von dem Primärzyklon (3310) ausgetragenen Luft enthaltene Teilchen erneut abzutrennen,
einem ersten Verbindungsrohr (410), das den ersten Einlass (3311) und den Körpereinlass miteinander verbindet, und
einem Staubspeicherteil zum Speichern von durch das Primärzyklon (3310) und das mindestens eine Sekundärzyklon (3320) abgetrenntem Staub,
**dadurch gekennzeichnet, dass** er
einen Flügelfilter (3350) aufweist, der eine Vielzahl von Hauptflügeln (3353), die jeweils unter einem vorbestimmten Winkel angeordnet sind, und ein Tragelement (3351), das eine Vielzahl der Hauptflügel (3353) trägt, umfasst,
wobei der Flügelfilter (3350) in dem Primärzyklon (3310) vorgesehen ist, um die Luft in dem Primärzyklon (3310) zu filtern, und
wobei der Flügelfilter (3350) eine nach unten schräg verlaufende Form besitzt.

2. Der Staubsauger gemäß Anspruch 1, ferner mit einem Element zum Verhindern des Verwirbelns, das an dem Flügelfilter vorgesehen ist, um zu verhindern, dass die von dem Primärzyklon abgetrennten Teilchen verwirbelt werden.

3. Der Staubsauger gemäß Anspruch 2, wobei das Element zum Verhindern des Verwirbelns in einem Körper eines unteren Endes des Flügelfilters eingebaut ist.

4. Der Staubsauger gemäß einem der Ansprüche 1 bis 3, wobei eine Vielzahl der Hauptflügel (3353) gleichmäßig voneinander in einer Umfangsrichtung beabstandet sind.

5. Der Staubsauger gemäß einem der Ansprüche 1 bis 4, wobei der Flügelfilter (3350) abnehmbar in dem Primärzyklon (3310) vorgesehen ist.

6. Der Staubsauger gemäß Anspruch 5, wobei ein Vorsprung mit einer bestimmten Form entweder an einem oberen Ende des Flügelfilters oder einem Rand des ersten Auslasses vorgesehen ist, wobei eine Verriegelungsausnehmung an entweder dem Rand des ersten Auslasses oder dem oberen Ende des Flügelfilters so vorgesehen ist, dass der Vorsprung darin verriegelt sein kann, und wobei der Vorsprung und die Verriegelungsausnehmung eingerichtet sind, um miteinander durch relatives Drehen des Flügelfilters entlang dem Rand des ersten Auslasses miteinander verriegelt werden können.

7. Der Staubsauger gemäß einem der Ansprüche 1 bis 6, ferner mit einem Hilfsfilter, der entweder an einer Innenseite oder einer Außenseite des Flügelfilters vorgesehen ist, um in der Luft enthaltene Teilchen abzufiltern.

8. Der Staubsauger gemäß einem der Ansprüche 1 bis 7, wobei jeder einer Vielzahl der Hauptflügel (3353) nach innen und nach unten geneigt ist.

9. Der Staubsauger gemäß Anspruch 8, wobei eine obere Weite jedes einer Vielzahl der Hauptflügel (3353) größer ist als eine untere Weite des entsprechenden Hauptflügels (3353).

10. Der Staubsauger gemäß einem der Ansprüche 1 bis 9, wobei der Staubspeicherteil unter dem Primärzyklon (3310) vorgesehen ist, um abnehmbar an dem Reinigerkörper (100) angebracht zu werden.

11. Der Staubsauger gemäß einem der Ansprüche 1 bis 10, wobei das mindestens eine Sekundärzyklon (3320) an einem Außenumfang des Primärzyklons (3310) in einer Umfangsrichtung angeordnet ist, um in einen einzelnen Körper des Primärzyklons (3310) eingebaut zu sein.

12. Der Staubsauger gemäß einem der Ansprüche 1 bis 11, ferner mit einer oberen Abdeckung (3400), die abnehmbar an Oberseiten des Primärzyklons (3310) und des mindestens einen Sekundärzyklons (3320) angebaut ist, um die Oberseiten abzudecken, wobei ein Filter zum Ausfiltern von Staub aus der von dem mindestens einen Sekundärzyklon (3320) ausgetragenen Luft in der oberen Abdeckung (3400) vorgesehen ist.

13. Der Staubsauger gemäß einem der Ansprüche 1 bis 12, wobei der Flügelfilter (3350) aus einem Material auf Kunststoffbasis ausgebildet ist, um das Reinigen des Flügelfilters (3350) zu erleichtern.

## Revendications

1. Aspirateur comprenant :
un corps d'aspirateur (100) ayant une entrée de corps et une sortie de corps (610), dans lequel un air aspiré par une buse d'admission (200) est introduit via l'entrée de corps, pour être déchargé à l'extérieur via la sortie de corps (610) ;
un cyclone principal (3310) ayant une première entrée (3311) communiquant avec l'entrée de corps et une première sortie pour séparer les particules de l'air introduit ;
au moins un cyclone secondaire (3320) prévu à l'extérieur du cyclone principal (3310) pour séparer à nouveau les particules contenues dans l'air déchargé du cyclone principal (3310) ;
un premier tube de raccordement (410) raccordant la première entrée (3111) et l'entrée de corps ensemble ; et
une partie de stockage de poussière pour stocker la poussière séparée par le cyclone principal (3310) et le au moins un cyclone secondaire (3320) ;
**caractérisé par** comprenant :
un filtre à pales (3350) ayant une pluralité de pales principales (3353) agencée chacune à un angle prédéterminé et un élément de support (3351) supportant une pluralité de pales principales (3353),
dans lequel le filtre à pales (3350) est prévu à l'intérieur du cyclone principal (3310) pour filtrer l'air à l'intérieur du cyclone principal (3310), et
dans lequel le filtre à pales (3350) a une forme progressivement rétrécie vers le bas.

2. Aspirateur selon la revendication 1, comprenant en outre un élément anti-diffusion pour le filtre à pales pour empêcher la diffusion des particules séparées par le cyclone principal.

3. Aspirateur selon la revendication 2, dans lequel l'élément anti-diffusion s'intègre dans un corps d'une extrémité inférieure du filtre à pales.

4. Aspirateur selon l'une quelconque des revendications 1 à 3, dans lequel une pluralité de pales principales (3353) sont espacées régulièrement les unes des autres dans une direction circonférentielle.

5. Aspirateur selon l'une quelconque des revendications 1 à 4, dans lequel le filtre à pales (3350) est prévu de manière détachable à l'intérieur du cyclone principal (3310).

6. Aspirateur selon la revendication 5, dans lequel une saillie ayant une forme prédéterminée est prévue sur une extrémité supérieure du filtre à pales ou un bord de la première sortie, dans lequel un évidement de verrouillage est prévu sur le bord de la première sortie ou l'extrémité supérieure du filtre à pales pour avoir la saillie bloquée à l'intérieur de ce dernier, et dans lequel la saillie et l'évidement de verrouillage sont adaptés pour être verrouillées ensemble en faisant tourner le filtre à pales relativement le long du bord de la première sortie.

7. Aspirateur selon l'une quelconque des revendications 1 à 6, comprenant en outre un filtre auxiliaire prévu à l'intérieur ou l'extérieur du filtre à pales pour filtrer les particules contenues dans l'air.

8. Aspirateur selon l'une quelconque des revendications 1 à 7, dans lequel chacune d'une pluralité de pales principales (3353) est inclinée vers l'intérieur et vers le bas.

9. Aspirateur selon la revendication 8, dans lequel une largeur supérieure de chacune d'une pluralité de pales principales (3353) est supérieure à une largeur inférieure de la pale principale (3353) correspondante.

10. Aspirateur selon l'une quelconque des revendications 1 à 9, dans lequel la partie de stockage de poussière est prévue sous le cyclone principal (3310) pour être assemblée de manière détachable au corps d'aspirateur (100).

11. Aspirateur selon l'une quelconque des revendications 1 à 10, dans lequel le au moins un cyclone secondaire (3320) est agencé sur une circonférence externe du cyclone principal (3310) dans une direction circonférentielle pour s'intégrer dans un corps du cyclone principal (3310).

12. Aspirateur selon l'une quelconque des revendications 1 à 11, comprenant en outre un couvercle supérieur (3400) assemblé de manière détachable aux parties supérieures du cyclone principal (3310) et du au moins un cyclone secondaire (3320) pour recouvrir les parties supérieures, dans lequel un filtre pour filtrer la poussière de l'air déchargé du au moins un cyclone secondaire (3320) est prévu à l'intérieur du couvercle supérieur (3400).

13. Aspirateur selon l'une quelconque des revendications 1 à 12, dans lequel le filtre à pales (3350) est formé à partir d'un matériau à base de plastique afin de faciliter le nettoyage du filtre à pales (3350).
